# EUROPEAN PATENT APPLICATION

(11) **EP 4 231 588 A1**
(43) Date of publication of application: **23.08.2023**
(21) Application number: 22157729.9
(22) Date of filing: 21.02.2022
(51) Int. Cl.: H04L 9/40, H04W 12/121, H04W 12/61, H04W 12/79

(54) **RECOGNIZING A SECURITY INCIDENT IN A COMMUNICATION NETWORK**

(71) Applicant: Deutsche Telekom AG, 53113 Bonn (DE)
(72) Inventor: SCHNIEDERS, Dominik, 52078 Aachen (DE); PELZER, Heiko, 41812 Erkelenz (DE)
(74) Representative: RDL Patentanwälte PartG mbB

(57) **Abstract**

A method for recognizing a security incident in a communication network, wherein a first entity and a second entity communicate via a connection provided by a communication network, and a computer program product for recognizing a security incident in a communication network.

## Description

The invention relates to a method for recognizing a security incident in a communication network, wherein a first entity and a second entity communicate via a connection provided by a communication network. The invention further relates to a computer program product for recognizing a security incident in a communication network.

Different implementations of a method for recognizing a security incident in a communication network form part of the state of the art and are used for protecting the first entity, the second entity and the communication network as a whole from a malicious attack, referred to herein as a security incident.

Known protective methods are based on different approaches and comprise data encryption, virtual private networks (VPN), digital certificates (authentication), intrusion detection and prevention systems (IDPS) and the like. However, as new types of attacks emerge every day, further approaches are needed for increasing a security of communication networks and entities connected thereto and comprised thereby.

It is, therefore, an object of the invention to suggest a method for recognizing a security incident in a communication network which is based on another approach and further increases a security of the communication network and entities connected thereto and comprised thereby. Another object of the invention is providing a computer program product for recognizing a security incident in a communication network.

One aspect of the invention is a method for recognizing a security incident in a communication network, wherein a first entity and a second entity communicate via a connection provided by a communication network. The first entity and the second entity communicate by transmitting data packets via the connection. The first entity and the second entity are hardware components or software modules which generally refer to endpoints of the communication, i.e. the first entity may send data packets which the second entity receives or the second entity may send data packets which the first entity receives. In other words, the first entity and the second entity shall be understood either as a sender and a receiver or as a receiver and a sender, respectively.

According to the invention, the first entity measures a latency of the connection and recognizes a security incident affecting the connection when the measured latency is incompatible with a reference parameter value. It is noted that at least two approaches are conceivable for measuring a latency of the connection.

The latency of the connection may be a run time of a packet passing the connection one-way, i.e. a one-way latency. Measuring the one-way latency allows the receiver for detecting a security incident on the way from the sender to the receiver.

Alternatively, the latency of the connection may be a sum of a first run time of a first packet passing the connection from the sender to the receiver, i.e. a first latency, and a second run time of a second packet passing the connection from the receiver to the sender, i.e. a second latency. As such, the latency is different from a round trip time (RTT) which includes the first latency from the sender to the receiver, a response time of the receiver and the second latency from the receiver to the sender. In order to derive the latency of the connection from the measured RTT, the measured RTT must be reduced by the response time of the receiver. Measuring the RTT allows the sender to detect a security incident either on the way from the sender to the receiver or on the way back to the sender.

The reference parameter value is a property of the connection constant at least within a predetermined time interval and known to the first entity. The measured latency may be readily compared with the reference parameter value in every instant. The first entity may derive the reference parameter value from measured latencies or receive the reference parameter value from the communication network.

Any substantial incompatibility indicates the security incident, e.g. a malicious attack, as a malicious attack inevitably affects the run time of a packet passing the connection, i.e. the latency of the connection. Using a measurable property of the connection is an innovative approach in recognizing security incidents.

According to one embodiment, for measuring the latency, the first entity has to determine sending timestamps and to receive, from the second entity, corresponding receiving timestamps, i.e. the first entity is the sender. According to another embodiment, for measuring the latency, the first entity has to receive, from the second entity, sending timestamps and to determine corresponding receiving timestamps, i.e. the first entity is the receiver. Each measured latency equals a difference of a receiving timestamp from a corresponding sending timestamp. Accordingly, measuring the latency requires a clock of the first entity and a clock of the second entity to be precisely synchronous.

In contrast, for measuring the round trip time, the first entity determines both sending time stamps and receiving timestamps, the receiving time stamps here being related to a receipt of a response from the second entity. However, the first entity has either to receive processing times from the second entity or to apply standard processing times assigned to the second entity in order to focus on the connection and exclude any impact of the second entity. Measuring the round trip time does not require the respective clocks of the first entity and the second entity to be precisely synchronous as the same clock, namely that of the first entity, provides both the sending time stamp and the receiving time stamp.

It is also noted, that the method may be readily applied to a plurality of simultaneous connections provided by the communication network wherein each reference parameter value may depend on the respective connection. Thus, reference parameter values of simultaneous connections may and usually will differ from each other.

Preferably, the first entity calculates a parameter value dependent of the measured latency and the first entity recognizes the security incident when a difference of the calculated parameter value from the reference parameter value equals or exceeds a predetermined threshold value. The calculated parameter value summarizes a plurality of measured latencies and may be easily compared with the reference parameter value. The predetermined threshold value determines a sensitivity of the recognition. The higher the threshold value is the less sensitive is the recognition. The lower the threshold value is the more sensitive is the recognition.

Alternatively, the first entity may recognize the security incident when the measured latency deviates from the reference parameter value. The first entity immediately compares the measured latency with the reference parameter value, i.e. the first entity does not perform any calculation. For instance, the measured latency, as compared with the reference parameter value, is a conspicuous outlier, i.e. is far outside a normal statistical variation of the latency.

In a favorable embodiment, a mean value, a standard deviation, a median value and/or a high percentile of the measured latency is calculated as the parameter value. The mean value, the standard deviation, the median value and the high percentile, e.g. a 99^{th} percentile, a 99.9^{th} percentile or a 99.99^{th} percentile, are calculated as time-related parameter values. Of course, the first entity has to know the corresponding reference parameter values in order to recognize the security incident.

Advantageously, the latency is measured continuously or during time intervals separate from each other. The time intervals may be arranged equidistant and/or having identical lengths. The continuous measurement uses each packet, each second packet, each third packet or another partition of packets sent by the first entity. The measurement during time intervals is restricted to packets sent by the first entity during the time intervals. Measurements having equidistant intervals and identical length are periodic measurements.

The connection may be intentionally affected by both known security attacks and normal interferences and the predetermined threshold value is adjusted for an acceptable ratio of false-positive recognitions and false-negative recognitions of security incidents. The false-positive recognition is a recognition of a security incident not being a security incident. The false-negative recognition is an ignored security incident, i.e. a security incident not recognized. The ratio indicates a precision of the method. The higher the ratio is the more security incidents are recognized incorrectly and the less security incidents are ignored incorrectly. The lower the ratio is, the less security incidents are recognized incorrectly, and the more security incidents are ignored incorrectly.

In different embodiments, the second entity or an intermediate network entity of the communication network generates a defined time dependence of the latency and the first entity recognizes the security incident when a time dependence of the measured latency deviates from the generated defined time dependence. The data packets, on the way through the communication network, pass the intermediate network entity. In other words, the second entity or the intermediate entity intentionally delay packets in order to generate the defined time dependence. The first entity knows the defined time dependence and expects the measured latency to match the defined time dependence. Any substantial difference of the measured latency from the generated time dependence indicates the security incident.

In other words, the second entity or the intermediate network entity authenticates with the first entity by means of the generated time dependence. The authentication is hard to discover by an attacker as it readily is mistaken as a statistical variance of the latency. As a result, a security of the communication network is further increased.

Particularly, a defined pattern of intentional delays having predetermined time distances and/or durations is generated as the defined time dependence. The defined pattern comprises a sequence of separate delays having individual durations. Thus, the defined pattern may be considered as a time code similar to the Morse code. The defined pattern may be unique within the communication network and identify the second entity or the intermediate network entity.

The defined time dependence is preferably generated by modulating the latency for carrying an information to be demodulated by the first entity. The information carried by the latency may uniquely identify the second entity or the intermediate network entity within the communication network.

The second entity or the intermediate network entity may vary the generated defined time dependence over time. Particularly, the defined time dependence is varied randomly. As a consequence, the defined time dependence is hard to imitate and a security of the communication network is further increased.

In advantageous embodiments, the second entity or the intermediate network entity defines the time dependence and the first entity receives a secret information concerning the defined time dependence from the second entity or the intermediate network entity via the connection. The first entity knows the defined time dependence from the secret information. The secret information may comprise data describing the defined time dependence, the data particularly being encrypted.

In further advantageous embodiments, the second entity or the intermediate network entity generates the defined time dependence upon a request of the first entity. In other words, the second entity or the intermediate network entity are challenged by the first entity.

The first entity and the second entity or the intermediate network entity may agree on the defined time dependence. The first entity participates in defining the time dependence of the latency, and thus the defined time dependence of the latency does not exclusively depend on the second entity or the intermediate network entity.

Shortly summarized, the defined time dependence of the latency is difficult for an attacker to recognize as a protective means, i.e. a means for recognizing, i.e. discovering, an attack. Therefore, the attacker is hindered from taking adequate measures for circumvent the protection and the attack is almost certainly recognized as a security incident. Additionally, the defined time dependence may be difficult to imitate. As a consequence, the defined time dependence strongly increases a security of the communication network.

In further embodiments, a terminal device or an application frontend of a distributed application executed by a terminal device or a server node or an application backend of a distributed application executed by a server node participates as the first entity or the second entity. The terminal device may be configured as a mobile device or a stationary device. The server node may be a cloud server connected to or comprised by the communication network. The distributed application may be any application comprising a frontend and, separate from the frontend, a backend in communication with each other. The security incident may, hence, be recognized at different logical layers of the connection, i.e. at a connection protocol layer or at an application layer.

Particularly, a mobile device executes the frontend as the terminal device and an edge cloud server executes the backend as the server node. The mobile device may be configured as a smartphone, a tablet, a notebook or the like. The edge cloud server may be located at a radio cell providing the mobile device with a wireless connection to the communication network.

The distributed application preferably adjusts a transmission parameter in a real-time cooperation with an intermediate network entity of the communication network. The application frontend of the distributed application may be provided by a terminal device connected to a node of the communication network providing a radio cell the terminal device is arranged in. The application backend of the distributed application may be executed by an edge cloud server located close to the radio cell. The distributed application may cooperate via a radio service layer in real-time with a scheduler of the radio cell as the intermediate network entity, the scheduler assigning spectral resources of the radio cell to the connection of the terminal device. Particularly, the distributed application may adjust a transmission bitrate according to the assigned spectral resources and/or the scheduler may highly prioritize the connection and/or the scheduler may permanently manage an over-all usage of spectral resources of the radio cell in order to provide the connection both with a very low latency and, particularly, a very small jitter, i.e. time variance of the latency. The smaller the jitter is, the more precisely the security incident is recognized.

Another object of the invention is a computer program product for recognizing a security incident in a communication network, comprising a storage medium with a program code to be read by a computing device. The storage medium may be a DVD, a USB stick, a memory chip, a hard disk, a cloud storage and the like being connectable to and accessible by the control unit.

According to the invention, the program code causes the computing device to participate in a method according to one of the preceding claims as the first entity, the intermediate network entity or the second entity when the program code is executed by a processor of the computing device. The program code enables the computing device to recognize a security incident by means of a latency of a connection provided by a communication network. Due to the computing device a security of the communication network is increased.

It is an essential advantage of the method according to the invention that another approach is used for increasing a security of a communication network and entities connected thereto and comprised thereby. The innovative approach may even be combined with any known approach for securing connections provided by a communication network.

It shall be understood that the features described previously and to be described subsequently may be used not only in the indicated combinations but also in different combinations or on their own without leaving the scope of the present invention.

The invention is described in detail by means of exemplary embodiments and with reference to the drawings. Like components are indicated by like reference numerals throughout the drawings.
- Fig. 1: schematically shows an entity diagram of a system carrying out a method according to the invention for recognizing a security incident in a communication network;
- Fig. 2: schematically shows a graph of a latency measured according to a first embodiment of the invention;
- Fig. 3: schematically shows a graph of a latency measured according to a second embodiment of the invention.

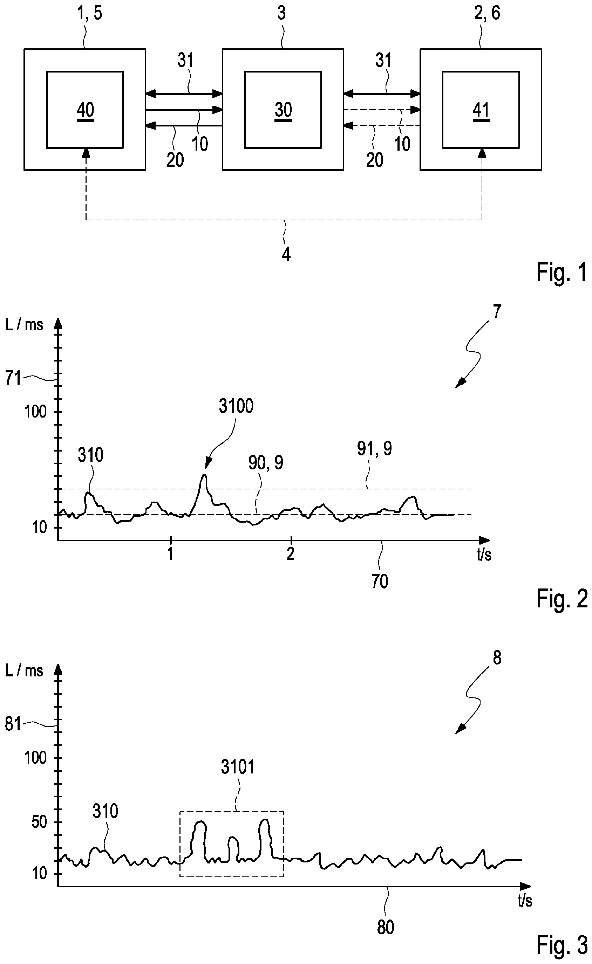

Fig. 1 schematically shows an entity diagram of a system carrying out a method according to the invention for recognizing a security incident in a communication network. The system comprises a first entity 1, a second entity 2 and a communication network 3. The communication network 3 may comprise an intermediate network entity 30. The first entity 1 or the second entity 2 may be configured as a terminal device 5 or an application frontend 40 of a distributed application 4 executed by a terminal device 5 or a server node 6 or an application backend 41 of a distributed application 4 executed by a server node 6, respectively, or vice versa.

The system may be implemented by means of a computer program product for recognizing a security incident in the communication network 3. The computer program product comprises a storage medium with a program code to be read by a computing device and causing the computing device to participate in a method described below as the first entity 1, the intermediate network entity 30 of the communication network 3 or the second entity 2 when the program code is executed by a processor of the computing device.

The system is configured for carrying out a method for recognizing a security incident in the communication network 3 as follows.

The first entity 1 and the second entity 2 communicate via a connection 31 provided by the communication network 3.

A terminal device 5 or an application frontend 40 of a distributed application 4 executed by a terminal device 5 or a server node 6 or an application backend 41 of a distributed application 4 executed by a server node 6 may participate as the first entity 1 or the second entity 2.

Particularly, a mobile device executes the frontend 40 as the terminal device 5 and an edge cloud server executes the backend 41 as the server node 6. The distributed application 4 may adjust a transmission parameter, e.g. a data rate of a transmission, in a real-time cooperation with the intermediate network entity 30 of the communication network 3.

The first entity 1 measures a latency 310 of the connection 31. The latency may be measured continuously or during time intervals separate from each other, the time intervals being arranged equidistant and/or having identical lengths.

The first entity 1 recognizes a security incident affecting the connection 31 when the measured latency 310 is incompatible with a reference parameter value 9 (see fig. 2).

In a first embodiment, the first entity 1 calculates a parameter value dependent of the measured latency 310 and recognizes the security incident when a difference of the calculated parameter value from the reference parameter value 9 equals or exceeds a predetermined threshold value.

For an optimal precision of the method, it is preferred that the connection 31 is intentionally affected by both known security attacks and normal interferences and the predetermined threshold value is adjusted for an acceptable ratio of false-positive recognitions and false-negative recognitions of security incidents.

A mean value, a standard deviation, a median value and/or a high percentile of the measured latency 310 is advantageously calculated as the latency parameter value.

Fig. 2 schematically shows a graph 7 of a latency 310 measured according to a second embodiment of the invention. The graph 7 comprises an abscissa 70 indicating a time t in seconds s and an ordinate 71 indicating a latency L in *ms.* The graph 7 further comprises the latency 310 measured over the time *t*, a mean value 90 as a first reference parameter value 9 and a 99^{th} percentile 91 as a second reference parameter value 9, the first and second reference parameter values 9 being constant over time.

In the second embodiment, the first entity 1 recognizes the security incident when the measured latency 310 deviates from the reference parameter value which applies for the deviation 3100 in relation to the 99^{th} percentile.

Fig. 3 schematically shows a graph 8 of a latency 310 measured according to a third embodiment of the invention. The graph 8 comprises an abscissa 80 indicating a time t in seconds s and an ordinate 81 indicating a latency L in *ms.* The graph 8 further comprises the latency 310 measured over the time t.

In the third embodiment, the second entity 2 or the intermediate network entity 30 of the communication network 3 generates a defined time dependence of the latency 310. A defined pattern 3101 of intentional delays having predetermined time distances and/or durations is preferably generated as the defined time dependence. For instance, three equidistant delays are generated, a length of the central delay being half of a length of an outer delay.

The defined time dependence may be generated by modulating the latency for carrying an information to be demodulated by the first entity 1. The second entity 2 or the intermediate network entity 30 of the communication network 3 advantageously varies the generated defined time dependence over time.

The second entity 2 or the intermediate network entity 30 of the communication network 3 may define the time dependence. The first entity 1 and the second entity 2 or the intermediate network entity 30 of the communication network 3 may also agree on the defined time dependence.

The first entity 1 may receive a secret information 20 concerning the defined time dependence from the second entity 2 or the intermediate network entity 30 of the communication network 3 via the connection 31. Alternatively the second entity 2 or the intermediate network entity 30 of the communication network 3 may generate the defined time dependence upon a request 10 of the first entity 1.

The first entity 1 recognizes the security incident when a time dependence of the measured latency 310 deviates from the generated defined time dependence.

### Reference Numerals

- 1: first entity
- 10: request
- 2: second entity
- 20: secret information
- 3: communication network
- 30: intermediate network entity
- 31: connection
- 310: measured latency
- 3100: deviation
- 3101: pattern
- 4: distributed application
- 40: frontend
- 41: backend
- 5: terminal device
- 6: server node
- 7: graph
- 70: abscissa
- 71: ordinate
- 8: graph
- 80: abscissa
- 81: ordinate
- 9: reference parameter value
- 90: mean value
- 91: 99^{th} percentile

## Claims

1. A method for recognizing a security incident in a communication network (3), wherein
- a first entity (1) and a second entity (2) communicate via a connection (31) provided by a communication network (3);
- the first entity (1) measures a latency (310) of the connection (31);
- the first entity (1) recognizes a security incident affecting the connection (31) when the measured latency (310) is incompatible with a reference parameter value (9).

2. The method according to claim 1, wherein the first entity (1) calculates a parameter value dependent of the measured latency (310) and recognizes the security incident when a difference of the calculated parameter value from the reference parameter value (9) equals or exceeds a predetermined threshold value or wherein the first entity (1) recognizes the security incident when the measured latency (310) deviates from the reference parameter value (9).

3. The method according to claim 1 or 2, wherein the latency is measured continuously or during time intervals separate from each other, the time intervals being arranged equidistant and/or having identical lengths.

4. The method according to one of claims 1 to 3, wherein the connection (31) is intentionally affected by both known security attacks and normal interferences and the predetermined threshold value is adjusted for an acceptable ratio of false-positive recognitions and false-negative recognitions of security incidents.

5. The method according to claim 1, wherein the second entity (2) or an intermediate network entity (30) of the communication network (3) generates a defined time dependence of the latency and the first entity (1) recognizes the security incident when a time dependence of the measured latency (310) deviates from the generated defined time dependence.

6. The method according to claim 5, wherein a defined pattern (3101) of intentional delays having predetermined time distances and/or durations is generated as the defined time dependence.

7. The method according to claim 5 or 6, wherein the defined time dependence is generated by modulating the latency for carrying an information to be demodulated by the first entity (1).

8. The method according to one claims 5 to 7, wherein the second entity (2) or the intermediate network entity (30) varies the generated defined time dependence over time.

9. The method according to one of claims 5 to 8, wherein the second entity (2) or the intermediate network entity (30) defines the time dependence and the first entity (1) receives a secret information (20) concerning the defined time dependence from the second entity (2) or the intermediate network entity (30) via the connection (31) or wherein the second entity (2) or the intermediate network entity (30) generates the defined time dependence upon a request (10) of the first entity (1).

10. The method according to one of claims 5 to 9, wherein the first entity (1) and the second entity (2) or the intermediate network entity (30) agree on the defined time dependence.

11. The method according to one of claims 1 to 10, wherein a terminal device (5) or an application frontend (40) of a distributed application (4) executed by a terminal device (5) or a server node (6) or an application backend (41) of a distributed application (4) executed by a server node (6) participates as the first entity (1) or the second entity (2).

12. The method according to claim 11, wherein a mobile device executes the frontend (40) as the terminal device (5) and an edge cloud server executes the backend (41) as the server node (6).

13. The method according to claim 12, wherein the distributed application (4) adjusts a transmission parameter in a real-time cooperation with an intermediate network entity (30) of the communication network (3).

14. A computer program product for recognizing a security incident in a communication network (3), comprising a storage medium with a program code to be read by a computing device and causing the computing device to participate in a method according to one of the preceding claims as the first entity (1), the intermediate network entity (30) or the second entity (2) when the program code is executed by a processor of the computing device.

## Amended claims

### Amended claims in accordance with Rule 137(2) EPC.

1. A method for recognizing a security incident in a communication network (3), wherein
- a first entity (1) and a second entity (2) communicate via a connection (31) provided by a communication network (3);
- the first entity (1) measures a latency (310) of the connection (31);
- the first entity (1) recognizes a security incident affecting the connection (31) when the measured latency (310) is incompatible with a reference parameter value (9);
- the second entity (2) or an intermediate network entity (30) of the communication network (3) generates a defined time dependence of the latency by intentionally delaying packets wherein a defined pattern (3101) of intentional delays having predetermined time distances and/or durations is generated as the defined time dependence, and the first entity (1) recognizes the security incident when a time dependence of the measured latency (310) deviates from the generated defined time dependence.

2. The method according to claim 1, wherein the first entity (1) calculates a parameter value dependent of the measured latency (310) and recognizes the security incident when a difference of the calculated parameter value from the reference parameter value (9) equals or exceeds a predetermined threshold value or wherein the first entity (1) recognizes the security incident when the measured latency (310) deviates from the reference parameter value (9).

3. The method according to claim 2, wherein the connection (31) is intentionally affected by both known security attacks and normal interferences and the predetermined threshold value is adjusted for an acceptable ratio of false-positive recognitions and false-negative recognitions of security incidents.

4. The method according to one of claims 1 to 3, wherein the latency is measured continuously or during time intervals separate from each other, the time intervals being arranged equidistant and/or having identical lengths.

5. The method according to one of claims 1 to 4, wherein the defined time dependence is generated by modulating the latency for carrying an information to be demodulated by the first entity (1).

6. The method according to one claims 1 to 5, wherein the second entity (2) or the intermediate network entity (30) varies the generated defined time dependence over time.

7. The method according to one of claims 1 to 6, wherein the second entity (2) or the intermediate network entity (30) defines the time dependence and the first entity (1) receives a secret information (20) concerning the defined time dependence from the second entity (2) or the intermediate network entity (30) via the connection (31) or wherein the second entity (2) or the intermediate network entity (30) generates the defined time dependence upon a request (10) of the first entity (1).

8. The method according to one of claims 1 to 7, wherein the first entity (1) and the second entity (2) or the intermediate network entity (30) agree on the defined time dependence.

9. The method according to one of claims 1 to 8, wherein a terminal device (5) or an application frontend (40) of a distributed application (4) executed by a terminal device (5) or a server node (6) or an application backend (41) of a distributed application (4) executed by a server node (6) participates as the first entity (1) or the second entity (2).

10. The method according to claim 9, wherein a mobile device executes the frontend (40) as the terminal device (5) and an edge cloud server executes the backend (41) as the server node (6).

11. The method according to claim 10, wherein the distributed application (4) adjusts a transmission parameter in a real-time cooperation with an intermediate network entity (30) of the communication network (3).

12. A computer program product for recognizing a security incident in a communication network (3), comprising a storage medium with a program code to be read by a computing device and causing the computing device to participate in a method according to one of the preceding claims as the first entity (1), the intermediate network entity (30) or the second entity (2) when the program code is executed by a processor of the computing device.
